# EUROPÄISCHE PATENTANMELDUNG

(11) **EP 2 522 885 A1**
(43) Veröffentlichungstag der Anmeldung: **14.11.2012**
(21) Anmeldenummer: 11165711.0
(22) Anmeldetag: 11.05.2011
(51) Int. Cl.: F16J 15/26

(54) **Dichtungsanordnung**

(71) Anmelder: Rheinfelden Alloys GmbH & Co. KG, 79618 Rheinfelden (DE)
(72) Erfinder: Franke, Rüdiger, 79539 Lörrach (DE)
(74) Vertreter: Rentsch Partner AG

(57) **Zusammenfassung**

Bei einer Anordnung zum Abdichten einer mit einer flüssigen Schmelze (10) aus Aluminium oder einer Aluminiumlegierung in Kontakt stehenden und um eine Wellenachse (x) rotierenden und/oder in Richtung der Wellenachse (x) sich hin und her bewegenden Welle (16) umschliesst wenigstens ein ringförmiges Dichtungselement (44) die Welle (16). Das Dichtungselement (44) bzw. die Dichtungselemente (44) bestehen aus einem Kohlenstoff, einem keramischen oder einem metallischen Werkstoff und die Welle (16) ist im Umschliessungsbereich des Dichtungselementes (44) bzw. der Dichtungselemente (44) mit einer Beschichtung (60) aus einem Kohlenstoff, einem keramischen oder einem metallischen Werkstoff versehen, wobei die Verschleissfestigkeit der Beschichtung (60) der Welle (16) höher ist als die Verschleissfestigkeit des Dichtungselementes (44) bzw. der Dichtungselemente (44).

## Beschreibung

Die Erfindung betrifft eine Anordnung zum Abdichten einer mit einer flüssigen Schmelze aus Aluminium oder einer Aluminiumlegierung in Kontakt stehenden und um eine Wellenachse rotierenden und/oder in Richtung der Wellenachse sich hin und her bewegenden Welle, mit wenigstens einem die Welle umschliessenden ringförmigen Dichtungselement.

Zur Abdichtung von flüssige Metallschmelze enthaltenden Behältern ist es bekannt, beim Durchtritt von Wellen durch eine Behälterwand das Auslaufen von Flüssigmetall durch die Anordnung von Dichtungsschnüren aus einem feuerfesten Material zu verhindern. Diese Art Dichtung ist für hoch beanspruchte bewegliche Teile im Dauerbetrieb ungeeignet.

Der Erfindung liegt die Aufgabe zugrunde, eine mit einer flüssigen Schmelze aus Aluminium oder einer Aluminiumlegierung in Kontakt stehende und um eine Wellenachse rotierende und/oder in Richtung der Wellenachse sich hin und her bewegende Welle abzudichten.

Zur erfindungsgemässen Lösung der Aufgabe führt bei einer Anordnung der eingangs genannten Art, dass das Dichtungselement bzw. die Dichtungselemente aus einem Kohlenstoff, einem keramischen oder einem metallischen Werkstoff besteht bzw. bestehen und die Welle im Umschliessungsbereich des Dichtungselementes bzw. der Dichtungselemente mit einer Beschichtung aus einem Kohlenstoff, einem keramischen oder einem metallischen Werkstoff versehen ist, wobei die Verschleissfestigkeit der Beschichtung der Welle höher ist als die Verschleissfestigkeit des Dichtungselementes bzw. der Dichtungselemente.

Bei einer bevorzugten Anordnung ist die Welle in einem mit der Schmelze gefüllten Behälter angeordnet und tritt durch eine Öffnung in einer Wand des Behälters hindurch und das Dichtungselement bzw. die Dichtungselemente ist bzw. sind ausserhalb des Behälters angeordnet.

Zweckmässigerweise ist das Dichtungselement bzw. sind die Dichtungselemente in einem bezüglich der Welle feststehenden Dichtungsgehäuse angeordnet.

Bevorzugt weist das Dichtungselement bzw. weisen die Dichtungselemente mit der Welle bei einer Betriebstemperatur von etwa 550°C bis 650°C eine Übergangspassung oder eine leichte Presspassung auf.

Bevorzugt bestehen das Dichtungselement bzw. die Dichtungselemente und die Beschichtung aus einem diamantähnlichen Kohlenstoff (DLC, diamond like carbon), Zirkonoxid, Aluminiumtitanat, Bornitrid oder Wolfram oder einer Mischung von wenigstens zwei der vorgenannten Materialien.

Das Dichtungselement kann bzw. die Dichtungselemente können als geschlossener Ring oder Muffe, als gespaltener Ring oder als Ring aus zwei Halbschalen ausgebildet sein.

Die Welle besteht bevorzugt aus einem Stahlwerkstoff und die Beschichtung auf der Welle weist einen kleineren thermischen Ausdehnungskoeffizienten auf als der Stahlwerkstoff der Welle.

Weitere Vorteile, Merkmale und Einzelheiten der Erfindung ergeben sich aus der nachfolgenden Beschreibung bevorzugter Ausführungsbeispiele sowie anhand der Zeichnung, die lediglich zur Erläuterung dient und nicht einschränkend auszulegen ist. Die Zeichnung zeigt schematisch in
- Fig. 1: einen Längsschnitt durch einen Teilbereich eines Behälters mit einer Anordnung mit Dichtungselementen zum Abdichten einer eine Wand des Behälters durchdringenden Welle;
- Fig. 2: die Draufsicht in Axialrichtung auf eine erste Ausführungsform eines Dichtungselementes;
- Fig. 3: die Draufsicht in Axialrichtung auf eine zweite Ausführungsform eines Dichtungselementes;
- Fig. 4: die Draufsicht in Axialrichtung auf eine dritte Ausführungsform eines Dichtungselementes;

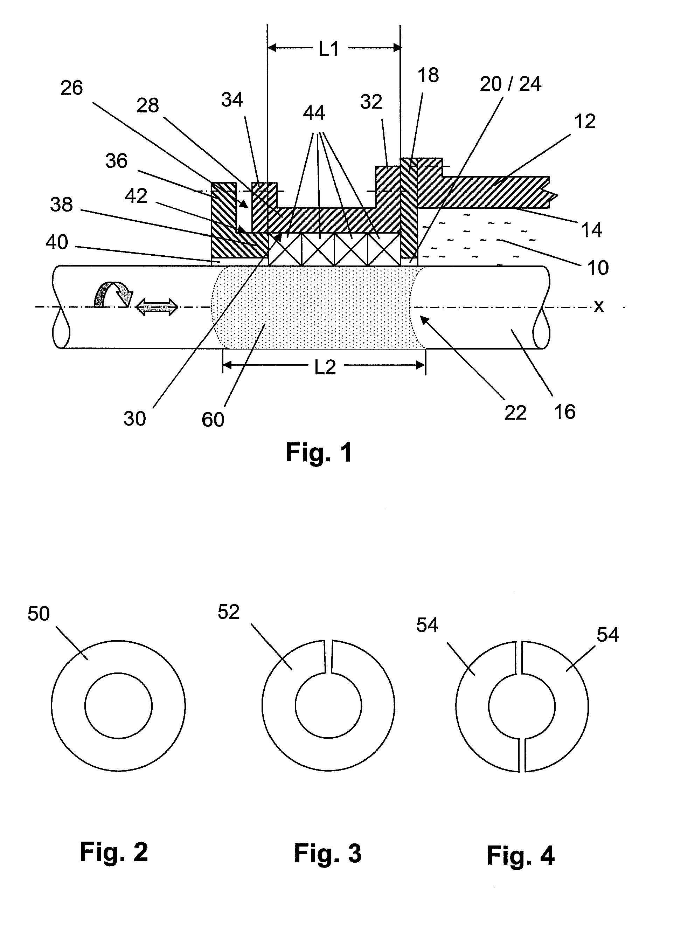

Fig. 1 zeigt einen Teilbereich eines mit einer flüssigen Schmelze 10 aus Aluminium oder einer Aluminiumlegierung gefüllten Behälters 12 mit zylindrischer Innenwand 14 und einer im Behälter 12 konzentrisch zur Innenwand 14 angeordneten Welle 16 mit einer Wellenachse x. Die Welle 16 tritt durch eine Öffnung 20 einer rechtwinklig zur Wellenachse x angeordneten Stirnwand 18 des Behälters 12 nach aussen, wobei in der Stirnwand 18 zwischen dem Rand der Öffnung 20 und der Mantelfläche 22 der Welle 16 für eine ungehinderte Drehbarkeit und Axialverschiebbarkeit der Welle 16 ein Ringspalt 24 als radiales Spiel für die Welle 16 verbleibt.

An der Aussenseite des Behälters 12 ist ein Dichtungsgehäuse 26 mit einem die Welle 16 umschliessenden Gehäuseteil 28 mit konzentrisch zur Wellenachse x liegendem zylindrischen Innenmantel 30 über einen ersten Befestigungsflansch 32 an der Stirnwand 18 des Behälters 12 angeflanscht.

An dem von der Stirnwand 18 weiter entfernten Ende ist das Dichtungsgehäuse 26 über einen zweiten Befestigungsflansch 34 mit einem Anschlussflansch 36 zur Befestigung einer in der Zeichnung nicht dargestellte Antriebsvorrichtung für die Rotation und die axiale Hin- und Herbewegung der Welle 16 verbunden. Der Anschlussflansch 36 umschliesst die Welle 16 mit einem zylinderförmigen Rohransatz 38 unter Freilassung eines Ringspaltes 40 zur Einhaltung eines axialen Spiels für die Welle 16. Der zylindrische Aussenmantel 42 des Rohransatzes 38 erstreckt sich in den Gehäuseteil 38 und liegt dem zylindrischen Innenmantel 30 des Gehäuseteils 28 gleitend an.

Das Gehäuseteil 28 des Dichtungsgehäuses 26 umschliesst ringförmig ausgebildete Dichtungselemente 44, die ihrerseits die Welle 16 umschliessen. Im gezeigten Beispiel sind vier Dichtungselemente 44 einander anliegend auf der Welle 16 aufgereiht. Ein erstes der vier Dichtungselemente 44 liegt der Stirnfläche 18 an. Auf der anderen Seite liegt der Rohransatz 38 über eine einstellbare Federkraft stirnseitig dem letzten der vier Dichtungselemente 44 kraftschlüssig an.

Die Dichtungselemente können als geschlossener Ring 50 oder Muffe (Fig. 2), als gespaltener Ring 52 (Fig. 3) oder als aus zwei Halbschalen (54) bestehender Ring (Fig. 4) ausgeführt sein. Die Anzahl der Dichtungselemente 44 kann beliebig gewählt werden und liegt im allgemeinen zwischen etwa 3 und 10.

Die Dichtungselemente 44 erstrecken sich innerhalb des Gehäuseteils 28 über eine axiale Länge L1. Der den Dichtungselementen 44 anliegende Bereich der Mantelfläche 22 der Welle 16 ist über eine axiale Länge L2, welche im Wesentlichen der Länge L1 erhöht um die axiale Verschiebungskomponente der im Betrieb sich hin und her verschiebenden Welle 16 entspricht, mit einer Beschichtung 60 versehen.

Der Werkstoff für die Beschichtung 60 der Welle 16 im Bereich der Dichtung wird so gewählt, dass die Verschleissfestigkeit der Beschichtung 60 höher ist als die Verschleissfestigkeit der Dichtungselemente 44. Geeignete Beschichtungen für die Welle 16 im Dichtungsbereich sind Kohlenstoff-, keramische oder metallische Beschichtungen. Beispiele von Beschichtungsmaterialien sind etwa diamantähnlicher Kohlenstoff (DLC, diamond like carbon), Zirkonoxid, Aluminiumtitanat, Bornitrid und Wolfram.

Geeignete Werkstoffe für die Dichtungselemente 44 sind ebenfalls Kohlenstoff, keramische Materialien oder Metalle, wobei darauf zu achten ist, dass die Verschleissfestigkeit der Dichtungselemente 44 geringer ist als die Verschleissfestigkeit der Beschichtung 60 der Welle 16 im Dichtungsbereich.

Weiter ist darauf zu achten, dass die Beschichtung einen ähnlichen thermischen Ausdehnungskoeffizienten aufweist wie der Stahlwerkstoff der Welle 16. Damit kann ein Abplatzen der Beschichtung beim Aufheizen auf Betriebstemperatur verhindert werden.

Besonders bevorzugt ist eine glatte Ausbildung der Beschichtung 60 auf der Welle 16. Angestrebt wird auch keine oder nur eine geringe Benetzung der Beschichtung 60 und der Dichtungselemente 44 durch flüssige Schmelze aus Aluminium oder einer Aluminiumlegierung sowie eine chemische Beständigkeit des Beschichtungsmaterials 60 für die Welle 16 und des Werkstoffs für die Dichtungselemente 44 bis zu einer Temperatur von etwa 800°C

Die Dichtungselemente weisen eine im Vergleich zum Stahlwerkstoff der Welle 16 sowie weiterer Komponenten eine ähnliche, jedoch geringere Wärmeausdehnung auf.

Die Dimensionen der Dichtungselemente werden so gewählt, dass sich bei Betriebstemperatur eine Übergangspassung oder eine leichte Presspassung mit der Welle einstellt.

Eine vorstehend beschriebene Dichtungsanordnung eignet sich beispielsweise für den Betrieb einer z. B. aus der CH-A- 278 575 bekannten Misch- und Knetmaschine zur Herstellung teilfester Aluminiumlegierungen. Eine derartige Misch- und Knetmaschine weist einen Behälter auf, in welchem eine um eine Längsachse rotierende und sich translatorisch in der Längsachse hin und her bewegende Schneckenwelle angeordnet ist. Eine konzentrisch zur Schneckenwelle angeordnete Antriebswelle ist stirnseitig aus dem Behälter herausgeführt und mit einer Antriebseinheit zur Ausführung einer Rotationsbewegung der Schneckenwelle sowie einer mit der Schneckenwelle zusammenwirkenden Einrichtung zur simultanen Ausführung der translatorischen Bewegung der Schneckenwelle in der Wellenachse wirkverbunden.

## Patentansprüche

1. Anordnung zum Abdichten einer mit einer flüssigen Schmelze (10) aus Aluminium oder einer Aluminiumlegierung in Kontakt stehenden und um eine Wellenachse (x) rotierenden und/oder in Richtung der Wellenachse (x) sich hin und her bewegenden Welle (16), mit wenigstens einem die Welle (16) umschliessenden ringförmigen Dichtungselement (44),
**dadurch gekennzeichnet, dass**
dass das Dichtungselement (44) bzw. die Dichtungselemente (44) aus einem Kohlenstoff, einem keramischen oder einem metallischen Werkstoff bestehen und die Welle (16) im Umschliessungsbereich des Dichtungselementes (44) bzw. der Dichtungselemente (44) mit einer Beschichtung (60) aus einem Kohlenstoff, einem keramischen oder einem metallischen Werkstoff versehen ist, wobei die Verschleissfestigkeit der Beschichtung (60) der Welle (16) höher ist als die Verschleissfestigkeit des Dichtungselementes (44) bzw. der Dichtungselemente (44).

2. Anordnung nach Anspruch 1, **dadurch gekennzeichnet, dass** die Welle (16) in einem mit der Schmelze (10) gefüllten Behälter (12) angeordnet ist und durch eine Öffnung in einer Wand (18) des Behälters (12) hindurch tritt und das Dichtungselement (44) bzw. die Dichtungselemente (44) ausserhalb des Behälters angeordnet ist bzw. sind.

3. Anordnung nach Anspruch 1 oder 2, **dadurch gekennzeichnet, dass** das Dichtungselement (44) bzw. die Dichtungselemente (44) in einem bezüglich der Welle (16) feststehenden Dichtungsgehäuse (26) angeordnet ist bzw. sind.

4. Anordnung nach einem der Ansprüche 1 bis 3, **dadurch gekennzeichnet, dass** das Dichtungselement (44) bzw. die Dichtungselemente (44) mit der Welle (16) bei einer Betriebstemperatur von etwa 550°C bis 650°C eine Übergangspassung oder eine leichte Presspassung aufweisen.

5. Anordnung nach einem der Ansprüche 1 bis 4, **dadurch gekennzeichnet, dass** das Dichtungselement (44) bzw. die Dichtungselemente (44) und die Beschichtung (60) aus einem diamantähnlichen Kohlenstoff (DLC, diamond like carbon), Zirkonoxid, Aluminiumtitanat, Bornitrid oder Wolfram oder einer Mischung von wenigstens zwei der vorgenannten Materialien bestehen.

6. Anordnung nach einem der Ansprüche 1 bis 5, **dadurch gekennzeichnet, dass** das Dichtungselement (44) bzw. die Dichtungselemente (44) als geschlossener Ring (50) oder Muffe, als gespaltener Ring (52) oder als Ring aus zwei Halbschalen (54) ausgebildet ist bzw. sind.

7. Anordnung nach einem der Ansprüche 1 bis 6, **dadurch gekennzeichnet, dass** die Welle (16) aus einem Stahlwerkstoff besteht und die Beschichtung (60) auf der Welle (16) einen kleineren thermischen Ausdehnungskoeffizienten als der Stahlwerkstoff der Welle (16) aufweist.
